# EUROPEAN PATENT SPECIFICATION

(11) **EP 2 704 992 B1**
(45) Date of publication and mention of the grant of the patent: **20.03.2019**
(21) Application number: 12723887.1
(22) Date of filing: 04.05.2012
(51) Int. Cl.: C01F 7/00, C01B 13/36, C01G 9/00, C01G 51/00, C01G 53/00, B82Y 30/00

(54) **PREPARATION OF LAYERED DOUBLE HYDROXIDES**
HERSTELLUNG VON GESCHICHTETEN DOPPELHYDROXIDEN
PRÉPARATION D'HYDROXYDES DOUBLES LAMELLAIRES

(30) Priority: 04.05.2011 GB 201107345
(43) Date of publication of application: 12.03.2014
(73) Proprietor: Oxford University Innovation Limited, Botley Oxford OX2 0JB (GB)
(72) Inventor: O'HARE, Dermot, Oxfordshire OX1 3QR (GB); WANG, Chengle, Oxfordshire OX1 3QR (GB)
(74) Representative: Wilkinson, Stephen John
(86) International application number: PCT/GB2012/000417
(87) International publication number: WO 2012/150439

(56) References cited:
- WO-A2-2009/080597
- CN-A- 101 164 688
- WU H ET AL: "Synthesis of Zn/Co/Fe-layered double hydroxide nanowires with controllable morphology in a water-in-oil microemulsion", MATERIALS CHARACTERIZATION, ELSEVIER, NEW YORK, NY, US, vol. 61, no. 2, 1 February 2010 (2010-02-01), pages 227-232, XP026866983, ISSN: 1044-5803 [retrieved on 2009-12-05]
- GANG HU ET AL: "Unique Layered Double Hydroxide Morphologies Using Reverse Microemulsion Synthesis", JOURNAL OF THE AMERICAN CHEMICAL SOCIETY, vol. 127, no. 50, 1 December 2005 (2005-12-01), pages 17808-17813, XP55040949, ISSN: 0002-7863, DOI: 10.1021/ja0549392
- GANG HU ET AL: "One-step synthesis and AFM imaging of hydrophobic LDH monolayers", CHEMICAL COMMUNICATIONS, no. 3, 1 January 2006 (2006-01-01), page 287, XP55040832, ISSN: 1359-7345, DOI: 10.1039/b514368c
- BO LI ET AL: "Multiple Effects of Dodecanesulfonate in the Crystal Growth Control and Morphosynthesis of Layered Double Hydroxides", JOURNAL OF PHYSICAL CHEMISTRY C, vol. 112, no. 29, 24 July 2008 (2008-07-24), pages 10909-10917, XP55040954, ISSN: 1932-7447, DOI: 10.1021/jp8039274
- JEAN-LOUIS SALAGER: "LABORATORY OF FORMULATION, INTERFACES RHEOLOGY AND PROCESSES Mérida-Venezuela Versión # 2 (2002) FIRP BOOKLET # E300-A SURFACTANTS Types and Uses FIRP BOOKLET # E300-A", NANOPARTICLES, 15 December 2002 (2002-12-15), pages 1-50, XP055256074,

## Description

The present invention relates to methods for preparation of layered double hydroxides (LDHs), in particular having controlled particle size, shape and size distribution.

Layered double hydroxides (LDHs) are a class of compounds which comprise two metal cations and have a layered structure. A review of LDHs is provided in Structure and Bonding; Vol 119, 2005 Layered Double Hydroxides ed. X Duan and D.G. Evans. The hydrotalcites, perhaps the most well-known examples of LDHs, have been studied for many years.

LDHs can be represented by the general formula [M^{II}₍₁₋ₓ₎M^{III}ₓ(OH)₂]^{x+}A^{z-} _{x/z}.yH₂O or [M^{I}₍₁₋ₓ₎M^{III}ₓ(OH)₂]ⁿ⁺A^{z-}_{n/z}.yH₂O, where M^{I}, M^{II} and M^{III} are mono, di- and trivalent metal cations respectively, that occupy octahedral positions in hydroxide layers, A^{z-} is an interlayer charge-compensating anion where z is an integer, such as CO₃²⁻, NO₃⁻ or Cl⁻, n=2x-1, x is a number less than 1 and y is 0 or a number greater than 0. A large number of LDHs with a wide variety of M^{II}-M^{III} cation pairs (e.g., Ca-AI) as well as the M^{I}-M^{III} cation pair (e.g. Li-AI) with different anions in the interlayer space have been reported and studied.

WO-A-2009/080597 discloses the synthesis of LDHs using long alkyl chain alcohols in combination with an organic anion (which is required to charge balance the metal hydroxide layers).

Intercalates into LDHs are described in US 4,727,167, US 4,812,245 and WO-A-02/47729.

LDHs exhibit a wide range of anion-exchange reactions with guests such as organic carboxylates, sulfonates and a range of anionic metal complexes. These materials are of significant technological importance in diverse areas such as catalysis, optics, medical science, materials science and separation science.

The control and tailoring of the morphology and particle size of LDH materials is, in general, much more difficult than for many other materials. There is, however, a need for LDH materials of controlled particle size and controlled morphology. In particular, for nanocomposites (e.g. polymer/inorganic nanocomposites), particles with large aspect ratios give the greatest benefit for many important properties.

In Wu et al. (Wu H. et al., "Synthesis of Zn/Co/Fe-layered double hydroxide nanowires with controllable morphology in a water-in-oil microemulsion", Materials Characterization, 61 (2), (2010) p. 227-232), the particle size of LDH nanowires is controlled by varying the molar ratio surfactant:water. Different amounts of cetyltrimethylammonium bromide (CTAB) dissolved in n-hexane and n-hexanol are used as surfactant in a solvothermal treatment process.

It is also an aim of the present invention to address this problem.

The present invention accordingly provides a method for the preparation of layered double hydroxides according to claim 1.

This is greatly advantageous because, surprisingly, the applicants have discovered that using a volume ratio solution:surfactant in the range of 1:12 to 3:1 results in control over the particle size and particle size distribution of the LDH products. In addition particles of LDH prepared according to the invention may have controlled shape including high aspect ratios. Thus, preferably, the method is a method for controlling the particle size, particle size distribution and/or morphology of layered double hydroxides.

It is surprising that a non-ionic or cationic surfactant can control the particle size or morphology of the LDH product because, conventionally, anionic surfactants are used in conjunction with LDHs both in preparation and in subsequent ion exchange. This is because, as discussed above, LDHs exchange anions in their interlayer space. Consequently, the use of non-ionic or *cationic* surfactants would not, prior to the present invention, have been considered useful in LDH synthesis or investigation.

Preferably, the surfactant comprises a C₄-C₂₂ hydrocarbyl amine surfactant.

Most preferably, the surfactant comprises a C₁₂-C₂₂ hydrocarbyl amine surfactant, preferably a C₁₂-C₂₂ alkenyl amine surfactant. The most preferred surfactants comprise dioctylamine, N,N-dimethyltetradecylamine, oleylamine (C₁₈ alkenyl chain with one double bond) and/or a mixture of two or more of these surfactants.

A great advantage of an amine surfactant is that it may contribute to the oil phase, may enable control of the pH of the solution (without additional components in the reaction mixture) and thus precipitation of the LDH, and also may control particle size by forming micelles.

Generally, it is useful if there is an assistant surfactant also provided in the reaction mixture. Such assistant surfactants may comprise short or medium chain alcohols e.g. C₂ to C₆ primary alcohols such as 1-butanol.

Generally, the most preferred monovalent metal cation is Li+, and/or the most preferred divalent metal cations are selected from Mg²⁺, Co²⁺, Ca²⁺, Zn²⁺ or Ni²⁺.

The most preferred trivalent metal cations are selected from Al³⁺ and/or Fe³⁺.

Thus, generally, the method according to the first aspect of the invention results in layered double hydroxides of formula [M^{II}₍₁₋ₓ₎M^{III}ₓ(OH)₂]^{x+}A^{z-} _{x/z}.yH₂O. The most preferred layered double hydroxides for use in the present invention are calcium/aluminium (Ca/Al), magnesium/aluminium (Mg/Al) and cobalt/aluminium (Co/Al). Other preferred LDHs include Zn/AI, Ni/Fe, Mg/Fe, Ni/AI or Ca/Fe.

The predetermined volume ratio (metal containing solution:surfactant) is in the range of 1:12 to 3:1. Preferably, the predetermined volume ratio is in the range of 1:10 to 2:1 and most preferably 1:9 to 1:1.

Preferably, the reaction mixture additionally comprises an alcohol, in particular a C₂ to C₆ alcohol, most preferably butanol (e.g. n-butanol).

The method according to the invention is preferably performed wherein the predetermined temperature is 150°C or lower, preferably 125°C or lower. The predetermined period will usually be 36 hours or lower, preferably 30 hours or lower.

The method according to the present invention results in an LDH which, preferably, as prepared, comprises platelets (preferably hexagonal platelets) with a controlled particle size and/or morphology.

The particle size appears to relate to the solution/surfactant ratio with a lower ratio (i.e. relatively more surfactant) resulting in generally smaller particle size. For example, in the preferred embodiments of the present invention (Mg/AI LDHs) a ratio of 9 ml of surfactant to 1 ml of metal containing solution (i.e. ratio of 1:9 solution:surfactant) resulted in particle sizes between 30 and 50 nm. In comparison, for a ratio of 5 ml of surfactant compared to 5 ml of metal containing solution (i.e. ratio of 1:1 solution:surfactant) the particle size was in the range of 60 to 100 nm. For a ratio of 8 ml surfactant compared to 2 ml of metal containing solution (i.e. ratio of 1:4 solution:surfactant) the particle size distribution was in the range of 60 to 80 nm.

Thus, preferably, the controlled particle size is in the range of 30 to 100 nm, more preferably 30-80 nm (as defined by the diameter of the platelets).

Furthermore, the invention is greatly advantageous because, surprisingly it enables control over the shape of the particles of LDH. In particular, the method enables the average platelet area to be controlled in the range 900 to 6000 nm² (calculated assuming circular discs having the diameters of the platelets), more preferably 1200 to 5000 nm².

Generally the method enables control over the platelet thickness so that, preferably, the (e.g. average) platelet thickness is in the range 4.5 nm to 30 nm, more preferably 9 to 15 nm.

As discussed above a great advantage of the present invention is that the method allows control over aspect ratio (platelet area/platelet thickness), so that the aspect ratio of the platelets may be in the range 30 to 1500 nm (platelet area/platelet thickness), preferably 80 to 500 nm and most preferably between about 100 nm to 350 nm for the majority of platelets (but much higher for larger diameter platelets).

Materials produced according to the first aspect of the present invention find use in many areas of technology including in the usual fields in which LDHs find use (catalysis, optics, medical science, separation science and as material science) but particularly in additives in e.g. cement, polymers and as components in nanocomposites e.g. polymer/LDH nanocomposites and also specific medical uses in view of the controlled particle size of the particles. The important use as components in nanocomposites may be in composites with synthetic or bio- (or bio-inspired) polymers made from polar and/or non-polar monomers.

The process of the present invention provides layered double hydroxide having a controlled particle size distribution in the range 30 - 100 nm.

The present disclosure also relates to a composite comprising layered double hydroxide prepared according to the process of the present invention.

The invention is illustrated by the attached Figures in which:
**Figure 1****.** The XRD patterns of (a) Mg-Al-Oley-n (n=1-3) and (b) Co-Al-Oley-n (n=1-3).
**Figure 2****.** The IR spectra of (a) Mg-Al-Oley-n (n=1-3) and (b) Co-Al-Oley-n (n=1-3).
**Figure 3****.** TEM images of MgAl-Oley-1 (a), MgAl-Oley-2 (b) and MgAl-Oley-3 (c). Particle size distributions of MgAl-Oley-1 (d), MgAl-Oley-2 (g) and MgAl-Oley-3 (e).. (f) High resolution TEM image of platelets perpendicular to the grid indicated with white box in (b).
**Figure 4****.** TEM images of CoAl-Oley-1 (a), CoAl-Oley-2 (b) and CoAl-Oley-3 (c). Particle size distributions of CoAl-Oley-1 (d) and CoAl-Oley-3 (e).
**Figure 5****.** AFM images and cross section data of (a) MgAl-Oley-1, (b) MgAl-Oley-2 and (c) MgAl-Oley-3
**Figure 6****.** AFM images and cross section data of (a) CoAl-Oley-1, (b) CoAl-Oley-2 and (c) CoAl-Oley-3
**Figure 7****.** Plots of χ_{M}T (black squares) and χ_{M}⁻¹ (red circles) *vs.* T between 2 to 300K for (a) CoAl-Oley-1, (b) CoAl-Oley-2 and (c) CoAl-Oley-3. The solid lines are best fit to (χ_{M} = C/(T-θ) + χ_{TIP}). Insets: Low temperature ZFC (black squares) and FC (red squares) molar magnetisation showing the bifurcation point (Tᵢᵣᵣ) and blocking temperature (T_{B})
**Figure 8****.** Frequency dependence of in-phase (χ') and out-of-phase (χ") ((a) CoAl-Oley-1, (b) CoAl-Oley-2 and (c) CoAl-Oley-3) susceptibilities under an oscillating field of 3.5 Oe.

The invention is further illustrated by the Examples in which efficient methods for controlling the particle size and morphology of layered double hydroxides (LDHs) are described. The use of nano-dispersed LDHs or LDHs with unique crystalline morphologies have potential applications in the synthesis of organic/inorganic nanocomposites and as additives in e.g. cements.

Powder X-ray diffraction (XRD) patterns were recorded on a PANalytical X'Pert Pro instrument in reflection mode with Cu Ka radiation. The accelerating voltage was set at 40 kV with 40 mA current.

Metals were analysed using inductively coupled plasma (ICP) atomic emission spectroscopy. C and H contents were determined using the quantitative combustion technique.

Nanoplatelet TEM samples were dispersed in ethanol with sonication and then cast onto lacey carbon film. TEM was performed on JEOL 4000HR microscope with an accelerating voltage of 400 kV, or JEOL 2000 / JEOL2100 microscope with an accelerating voltage of 200 kV.

### Examples 1 (Mg-Al LDH) and 2 (Co-AI LDH)

### 1. Synthesis

LDHs nanocrystals were prepared via a hydrothermal method in 15-mL Teflon-lined autoclaves. A typical synthesis process is as follows:
Metal salts were dissolved in deionized water with the concentrations of 1.5M and 0.75M for M²⁺ and M³⁺ ions respectively. Oleylamine and assistant surfactant 1-butanol were mixed with magnetic stirring. Then, metal salts solution was added dropwise. After further stirring for 10 minutes, the mixture was heated at 120°C for 24 hours in a Teflon lined stainless autoclave. The details of the synthesis can be found in Table 1. The products were collected by centrifugation, washed three times with H₂O:EtOH =1:1, and dried in air. For MgAl-Oley-*n* (*n* = 1 - 3) samples, nitrate salts were used, while for CoAl-Oley-*n* (*n* = 1 - 3), chloride salts were used.

**Table 1 Summary of synthesis data for LDHs**

| | MgAl-Oley-1 | MgAl-Oley-2 | MgAl-Oley-3 | CoAl-Oley-1 | CoAl-Oley-2 | CoAl-Oley-3 |
|---|---|---|---|---|---|---|
| Oleylamine | 9 ml | 8 ml | 5 ml | 9 ml | 8 ml | 5 ml |
| 1-butanol | 5 ml | 5 ml | 5 ml | 5 ml | 5 ml | 5 ml |
| Mixed metal salt solution | 1 ml | 2 ml | 5 ml | 1 ml | 2 ml | 5 ml |

### 2. Characterisation

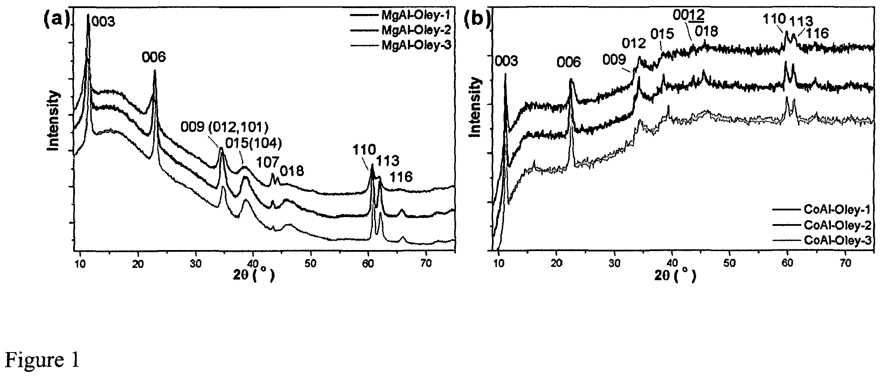

**X-Ray Diffraction** - Figure 1 shows the diffraction patterns of MgAl-Oley-n (*n* = 1 - 3) samples and CoAl-Oley-*n* (*n* = 1 - 3) samples. All six samples exhibit a series of (00/) Bragg reflections for a rhombohedral (3R) sequence giving a *c*-lattice parameters of about 23.5 Å for MgAl-Oley-*n* (*n* = 1 - 3) and 23.8 Å for CoAl-Oley-*n* (*n* = 1 - 3). These give the distances between layers of about 7.8 Å for MgAl-Oley-*n* (*n* = 1 - 3) and 7.9 Å for CoAl-Oley-*n* (*n* = 1 - 3), which are quite similar to the values of CO₃²⁻, NO₃⁻ or Cl⁻ ions intercalated LDHs. The position of (012), and (110) Bragg reflections gives a direct measure of *a*,*b*-lattice parameters a= *b* = 2d₁₁₀ = 3.05 Å for MgAl-Oley-*n* (*n* = 1 - 3) and 3.09 Å for CoAl-Oley-*n* (*n* = 1 - 3).

**Elemental Analysis** - The elemental analysis data (Table 2) indicates that the Co/AI molar ratios for the three CoAl-Oley-*n* (*n* = 1 - 3) samples are 2.23, 2.23 and 2.1 respectively. The N contents are from the absorbed oleylamine and its decomposition product. The chemical formulations of the samples can be roughly calculated (Table 2).

It is thought that MgAl-Oley-*n* (*n* = 1 - 3) samples are intercalated by CO₃²⁻ and NO₃⁻.

**Table 2 Summary of elemental analysis data for CoAl-Oley-n (n = 1 - 3), found (calc.)**

| | Co (%) | Al (%) | H (%) | C (%) | N (%) | Calc. Formula |
|---|---|---|---|---|---|---|
| 1 | 39.8(39.8) | 8.18(8.18) | 3.08 | 4.69 | 0.5 | Co_{2.23}Al(OH)_{6.5}Cl_{0.46}(CO₃)_{0.25}·0.9H₂O |
| 2 | 39.86(40.1) | 8.2(8.2) | 2.93 | 2.25 | 0.59 | Co_{2.23}Al(OH)_{6.5}Cl_{0.76}(CO₃)_{0.1}·H₂O |
| 3 | 41.28(40.4) | 9(8.8) | 2.71 | 0.92 | 0.35 | Co_{2.1}Al(OH)_{6.2}Cl_{0.9}(CO₃)_{0.05}·0.7H₂O |

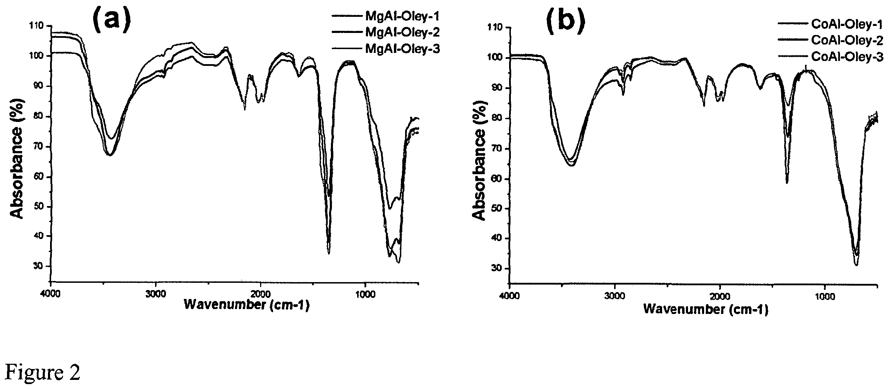

**IR spectroscopy** - The IR spectra of MgAl-Oley-*n* and CoAl-Oley-*n* (*n* = 1 - 3) are given in Figure 2. The board band centred at *ca*. 3450 cm⁻¹ corresponds to a combination of the stretching vibration of the hydroxide groups in the brucite sheets and the interlayer water molecules (v_{O-H}) (see, e.g. Kagunya, W.; Baddour-Hadjean, R.; Kooli, F.; Jones, W. *Chem. Phys.* **1998**, *236*, 225-234). The absorbance at 1625 cm⁻¹ is assigned to be the bending vibrations of the interlayer water molecules (δ_{O-H}), respectively (see Xu, Z.P.; Lu, G.Q., Chem. Mater., 2005, 17, 1055-1062).

The absorbances between 2500 to 3000 cm⁻¹ are attributed to symmetric and asymmetric stretching vibrations of CH₂ (v_{C-H}) and the asymmetric stretching of CH₃ (v_{C-H}) from the hydrocarbon chain of the absorbed oleylamine and its decomposition product.

For the CoAl-Oley-*n* (*n* = 1 - 3) samples, the strong absorbance at around 1360 cm⁻¹ indicated the existence of CO₃²⁻ (v₃), which is due to unavoidable absorption of CO₂ in the air. The absorbances below 1000 cm⁻¹ can be ascribed as vibrations of metal oxide bond (v_{M-O}) and other vibrations form CO₃²⁻ (v₂ and v₄).

For the MgAl-Oley-*n* (*n* = 1 - 3) samples, there was a strong absorption and a shoulder peak between 1300 cm⁻¹ and 1500 cm⁻¹, which could be ascribed as absorptions of CO₃²⁻ and NO₃⁻.

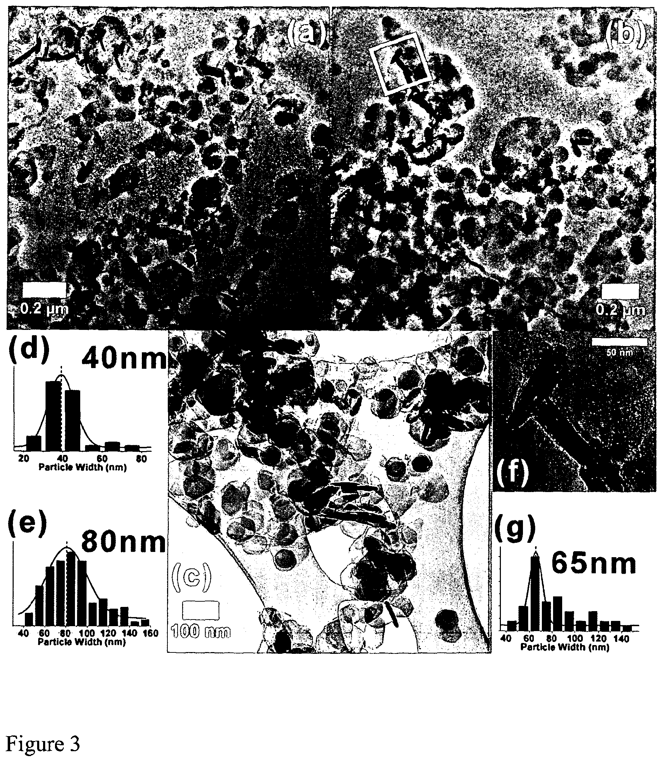

**Electron Microscopy** -Figure 3 is the TEM and HRTEM images of MgAl-Oley-*n* (*n* = 1 - 3). All the platelets are very thin, as one platelet can often be seen through another. Most of the platelets adopt a hexagonal shape. Particle size distributions can be collected by measuring over 100 particles. From the distributions, particles of MgAl-Oley-1 are mostly between 30-50 nm in width, while particles of MgAl-Oley-2 are a little bigger as expected, of which the majority falls in the range of 60-80 nm. For MgAl-Oley-3, the particle size distribution is wider than the other two and falls in the range of 60-100 nm. In all of the images, platelets standing perpendicular to the grids can be seen. In the higher magnification image of the standing platelets, lattice fringes can be clearly seen, which further confirmed the single-crystalline structure of the structure.

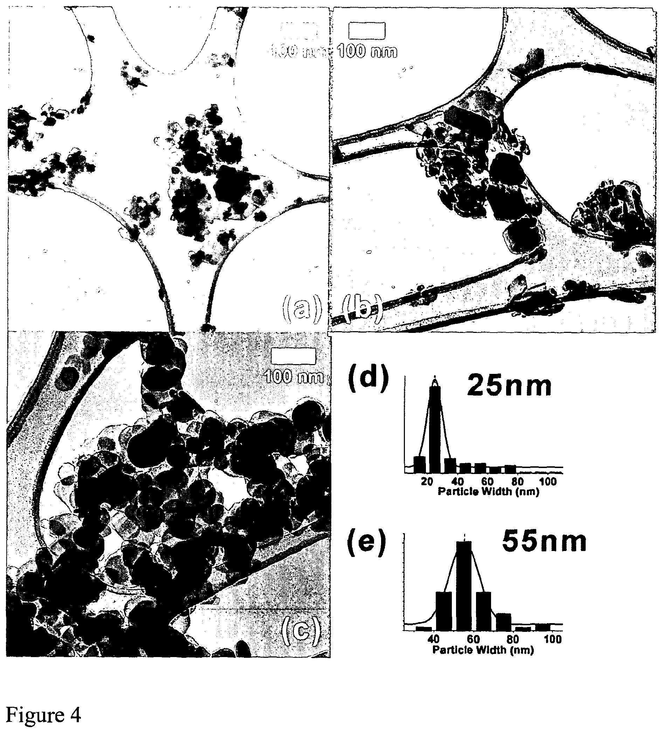

Figure 4 shows the TEM images of CoAl-Oley-*n* (*n* = 1 - 3). Particles of CoAl-Oley-1 are mostly around 25 nm in width, although there are a few bigger platelets. Particles of CoAl-Oley-2 are not uniform in size. Particles of different sizes ranging from 10 to over 100 nm can be seen. For CoAl-Oley-3, the particles are very uniform with a quite narrow distribution of 55 nm.

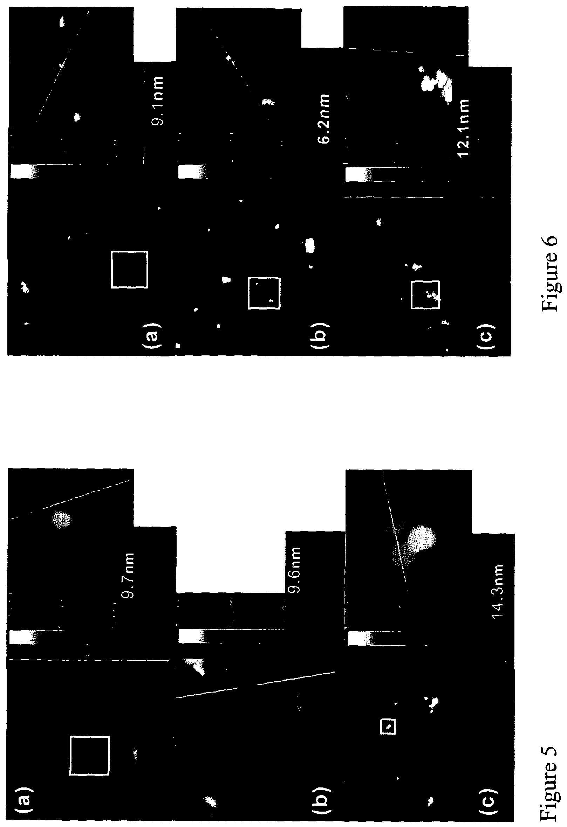

**AFM imaging** - AFM imaging was used to investigate the particle size, especially the thickness of the nanoplatelets. In Figure 5, the overall images, zoom-in images on a HOPG substrate and the cross-section plots of the MgAl-Oley-*n* (*n* = 1 - 3) samples are shown. In the overall images, dispersed platelets can be seen clearly. Platelets display well-shaped hexagons. For MgAl-Oley-*n (n* = 1 - 3) samples, cross-sectional analysis of a single particles gives the thicknesses of 9.7 nm, 9.6 nm and 14.3 nm, respectively.

Figure 6 shows the AFM images of CoAl-Oley-*n* (*n* = 1 - 3) samples. Cross-sectional analysis of single particles gives the thicknesses of 9.1 nm, 6.2 nm and 12.1 nm, respectively.

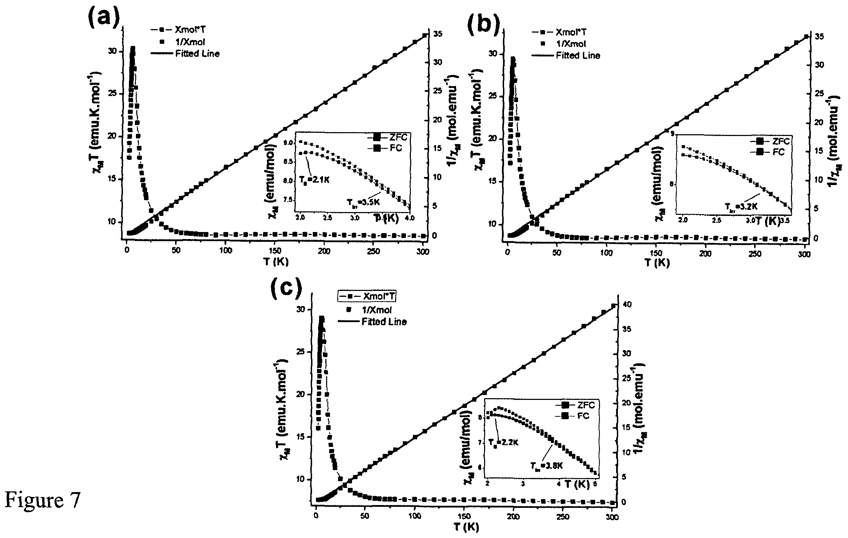

**Magnetic Properties** - The molar magnetic susceptibilities of CoAl-Oley-2 and CoAl-Oley-3 have been measured between 2K and 300K. Figure 7 show plots of χ_{M}T and χ_{M}⁻¹ *vs* T for CoAl-Oley-*n* (*n* = 1 - 3). Between 50 and 300 K, the materials obey the Curie-Weiss law with C = 8.56 emu K mol⁻¹ (µ_{eff} = 5.54 µ_{B} per Co) and 7.48 emu·K·mol-1 (µ_{eff} = 5.35 µ_{B} per Co) for CoAl-Oley-2 and CoAl-Oley-3 respectively. The magnetic moments are larger than the expected spin-only value for octahedral Co²⁺, d⁷ (µ_{eff} = 3.87µ_{B}, S = 3/2) indicating that a significant orbital contribution is involved. However, the values are in line with other octahedral Co²⁺ containing compounds with oxide or hydroxide ligand fields. The values of the Weiss constant (θ) are 0.98 K and 3.69 K for CoAl-Oley-2 and CoAl-Oley-3 respectively, suggesting short range ferromagnetic interactions.

Below 50K, the values of χ_{M}T exhibit a rapid increase to a maximum at 7K, which is ascribed to the onset of ferromagnetic ordering of the Co²⁺ spins. Also observed was a bifurcation in the zero-field (ZFC) and field cooled (FC) magnetic susceptibility below an irreversibility temperature Tᵢᵣᵣ (Figure 7 insets). At low temperatures the FC magnetization continues increasing, while the ZFC magnetization shows a broad maximum at the blocking temperature (T_{B}). The irreversibility temperature and the blocking temperature are 3.5K and 2.1K (CoAl-Oley-1), 3.8K and 2.2K (CoAl-Oley-3). The irreversibility temperature of CoAl-Oley-2 is 3.2K, however, the blocking temperature is out of the measuring range (<2K).

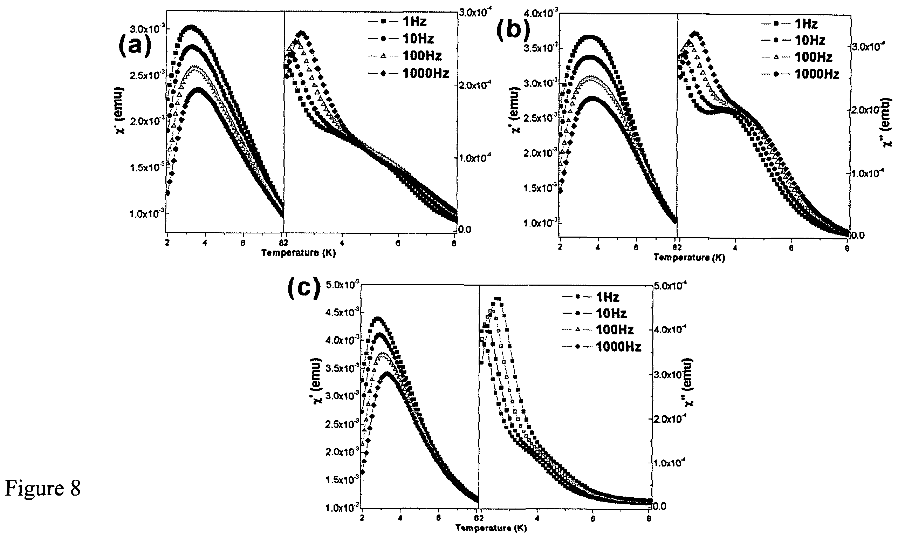

The onset of spontaneous magnetization was confirmed by the occurrence of nonzero signals in the in-phase (χ') and out of phase (χ") ac magnetic susceptibility (Figure 8). However, the nature of the magnetic interactions in these materials is not straightforward. It was observed that the temperature at which both the in-phase (χ') and out-of-phase (χ") susceptibilities reach maximum increases with increasing frequency, implying a slow relaxation process. When sizes of magnetically ordered particles are reduced to the nanometre length scale they may become single domain particles. Two different features are observed in both of the out of phase (χ") ac magnetic susceptibilities, which indicate that there are two transitions occurring, maybe involving the alignments of the dipoles from the interlayer and interlayer.

### 3. Conclusion

Mg-AI LDHs and Co-Al LDHs have been successfully synthesised in three different microemulsion systems, in which oleylamine is the surfactant, as well as base and oil phase. X-ray crystallography and IR spectra verified that the MgAl-Oley-*n* (*n*= 1 -3) samples were intercalated with NO₃⁻ ions and CO₃²⁻ ions between the layers, while the CoAl-Oley-*n* (*n*= 1 -3) samples were intercalated with Cl⁻ ions and CO₃²⁻ ions. The interlamellar distance is about 7.5 Å. TEM and AFM imaging reveals that the particles adopt a hexagonal disc-like structure.

The dc magnetic properties of the CoAl-Oley-*n* (*n*= 1 -3) are similar to the samples synthesised in DDS formed microemulsion.

### Examples 3 to 9

In Example 3 a narrow size distribution of Mg-Al LDH nanoparticles with diameters from 40 nm to 80 nm was obtained. The particle sizes of the LDHs could be controllable by adjusting the ratio of the components of the mixture. This method has the advantages of high productivity and flexibility. In Examples 4 to 9 the method has been extended to LDHs with other metal combinations: Co-Al, Ni-Al, Zn-Al, Li-Al, Ca-Al, Ni-Fe.

The amine components in the microemulsion are thought to play a number of roles in the synthesis: oil phase, base and surfactant. The protonation of amine provide the alkaline environment for the precipitation of the LDH particles. With the protonated amine heads and the alkyl chain, the amine also functions as a surfactant which forms reverse micelles that can act as a template for crystal growth of the LDH. The use of excess amine rather than a separate oil phase is advantageous because many amines e.g. oleylamine are a liquid at room temperature. This brings more advantages, such as recyclability and low environmental impact.

### Example 3. Mg-Al LDHs nanoparticles in single component microemulsions

### Synthesis

Oleylamine and 1-butanol were pre-mixed under a purge of N₂, after dropwise addition of a mixed metal salt solution, the mixture was heated at 120 °C for 24 hours in a Teflon lined stainless steel autoclave. The total volume of salt solution and oleylamine was maintained at 10 ml, while the volume ratio of oleylamine/solution was controlled as 9 for MgAl-OAm-1, 4 for MgAl-OAm-2 and 1 for MgAl-OAm-3. The products were collected by centrifugation.

To investigate the mechanism of crystal growth, the synthesis of MgAl-OAm-1 was carried out in triplicate and stopped after heating for 1, 3, and 5 hours respectively. The samples were collected by centrifugation, washed, dried, and named as MgAl-OAm-1-1h, MgAl-OAm-1-3h, and MgAl-OAm-1-5h.

### Elemental Analysis

The elemental analysis data (Table 3) indicates that the Mg/Al molar ratios for the three MgAl-OAm-n *(n* = 1 - 3) samples are 2.5, 2 and 2.3, respectively. Due to absorbed oleylamine, the carbon contents deviate slightly from the calculated value.

**Table 3 Summary of elemental analysis data for MgAl-OAm-n (n = 1 - 3)**

| Sample | observed (*calc.*) (%) | | | | Calc. Formula |
|---|---|---|---|---|---|
| | Mg | Al | C | H | |
| MgAl-OAm-1 | 12.91 (13.18) | 5.78 (6.27) | 3.41 (3.52) | 4.76 (6.85) | [Mg_{2.1}Al_{0.9}(OH)₆]Cl_{0.9}·9H₂O^{a,*} |
| MgAl-OAm-2 | 18.51 (18.53) | 10.05 (10.13) | (0.82) | 4.36 (4.73) | [Mg₂Al₁(OH)₆]Cl·3H₂O^{b,*} |
| MgAl-OAm-3 | 15.04 (14.94) | 7.14 (7.11) | (1.90) | 4.69 (6.23) | [Mg_{2.1}Al_{0.9}(OH)₆]Cl_{0.9}·7H₂O^{c,*} |

| | | | | | |
|---|---|---|---|---|---|
| ^{a} containing 4% absorbed oleylamine. ^{b} containing 1% absorbed oleylamine. ^{b} containing 2% absorbed oleylamine. ^{*} All three samples contain trace CO₃²⁻ observed in IR spectra | | | | | |

### Powder XRD Patterns of MgAl-OAm-n (n = 1 - 3) samples

The diffraction patterns of MgAl-OAm-n (n = 1 - 3) exhibited a series of (00I) Bragg reflections for a rhombohedral (3R) sequence giving a c-lattice parameters of ca. 23.2 Å for MgAl-OAm-n (n = 1 - 3). The calculated interlayer separation is ca. 7.7 Å, which is similar to the value found for Cl⁻ ion intercalated LDHs. The positions of the (110) Bragg reflections gives a direct measure of a,b - lattice parameters a = b = 2d₁₁₀ = 3.05 Å for MgAl-OAm-n (n = 1 - 3). Summary of X-ray crystallographic data can be found in Table 4.

**Table 4: Summary of X-ray crystallographic data for Mg-Al LDH samples.**

| samples | Bragg reflections (FWHM) (°) | | | | | Lattice parameters (Å) | |
|---|---|---|---|---|---|---|---|
| | 003 | 006 | 012 | 015 | 110 | | |
| MgAl-OAm-1 | 11.40(0.50) | 23.04(0.50) | 34.57 | 38.52 | 60.69(0.76) | 3.05 | 23.22 |
| MgAl-OAm-2 | 11.43(0.76) | 23.06(0.76) | 34.65 | 38.52 | 60.77(0.50) | 3.05 | 23.18 |
| MgAl-OAm-3 | 11.45(0.50) | 23.02(0.76) | 34.73 | 38.62 | 60.78(0.76) | 3.05 | 23.19 |

### Transmission Electron Microscopy

TEM images of MgAl-OAm-*n* (*n* = 1 - 3) show that all the platelets are very thin, as one platelet can often be imaged through another. Most of the platelets adopt a hexagonal shape. Particle size distribution was estimated by measuring in excess of 100 particles. Statistical analysis of the particle size distribution to a normal distribution gives the mean, standard deviation and variance (Table). The mean diameters are 49.18, 63.97 and 75.41 nm for MgAl-OAm-n (*n* = 1 - 3), respectively.

**Table 5 Data of statistical analysis of particle diameters and thicknesses**

| Sample | Diameter (nm) | | | Thickness (nm) | | |
|---|---|---|---|---|---|---|
| | Mean (µ) | Stdev. (σ) | Var. (σ²) | Mean (µ) | Stdev. (σ) | Var. (σ²) |
| MgAl-OAm-1 | 49.18 | 14.95 | 223.6 | 10.75 | 1.791 | 3.206 |
| MgAl-OAm-2 | 63.97 | 17.21 | 296.1 | 15.58 | 3.447 | 11.89 |
| MgAl-OAm-3 | 75.41 | 15.91 | 253.1 | 27.03 | 3.507 | 12.30 |

### Examples 4 to 9 (Co-Al, Ni-Al, Zn-Al, Li-Al, Ca-Al and Ni-Fe)

### Synthesis

Oleylamine (OAm), dioctylamine (DOAm) and N,N-dimethyltetradecylamine (DMTDAm) has been used to generate four single component microemulsions. Co-Al, Ni-Al, Zn-Al, Li-Al, Ca-Al, and Ni-Fe LDHs were synthesised in these three microemulsions. Ca-AI LDHs were synthesised in the microemulsions formed by OAm, or DOAm, or a mixture of equal OAm and DOAm, since they usually precipitate at relatively high pH. Co-Al and Ni-Al LDHs have been prepared in both OAm and DMTDAm. As the pH values of both microemulsions are suitable for synthesising Co-Al and Ni-Al LDHs, they were able to provide a comparison between the microemulsions formed by OAm and those formed by DMTDAm. Except Zn-Al LDHs, all the other products were carried out a solvothermal process under 120°C for 24 hours. Due to the facile formation of ZnO at higher temperature, the syntheses of Zn-Al LDHs were kept at 60°C for 12 hours. A summary of synthesis conditions of the products are listed in Table 6.

**Table 6: Summary of synthetic details using single component microemulsions**

| Amines | Metal Combinations | Conditions | Samples |
|---|---|---|---|
| dioctylamine (DOAm) | | | CaAl-DOAm-1 |
| | Ca-Al | 120°C,24h | CaAl-DOAm-2 |
| | | | CaAl-DOAm-3 |
| DOAm/OAm = 1:1 | | | CaAl-DOAm-OAm-1 |
| | Ca-Al | 120°C,24h | CaAl-DOAm-OAm-2 |
| | | | CaAl-DOAm-OAm-3 |
| oleylamine (OAm) | | | CoAl-OAm-1 |
| | Co-Al | 120°C, 24h | CoAl-OAm-2 |
| | | | CoAl-OAm-3 |
| | | | NiAl-OAm-1 |
| | Ni-Al | 120°C, 24h | NiAl-OAm-2 |
| | | | NiAl-OAm-3 |
| | | | CaAl-OAm-1 |
| | Ca-Al | 120°C, 24h | CaAl-OAm-2 |
| | | | CaAl-OAm-3 |
| N,N-dimethyltetradecylamine (DMTDAm) | | | CoAl-DMTDAm-1 |
| | Co-Al | 120°C, 24h | CoAl-DMTDAm-2 |
| | | | CoAl-DMTDAm-3 |
| | | | NiAl-DMTDAm-1 |
| | Ni-Al | 120°C, 24h | NiAl-DMTDAm-2 |
| | | | NiAl-DMTDAm-3 |
| | | | LiAl-DMTDAm-1 |
| | Li-Al | 120°C, 24h | LiAl-DMTDAm-2 |
| | | | LiAl-DMTDAm-3 |
| | | | ZnAl-DMTDAm-1 |
| | Zn-Al | 60°C, 12h | ZnAl-DMTDAm-2 |
| | | | ZnAl-DMTDAm-3 |
| | | | NiFe-DMTDAm-1 |
| | Ni-Fe | 120°C, 24h | NiFe-DMTDAm-2 |
| | | | NiFe-DMTDAm-3 |

### CoAl-OAm-n and CoAl-DMTDAm-n (n = 1 - 3)

CoAl-OAm-*n* (*n* = 1 - 3) nanoplatelets were prepared in single component microemulsions. A typical synthesis process is as follows: Solution A was prepared by dissolving CoCl₂·6H₂O (Sigma-Aldrich, 99%) and AlCl₃·6H₂O (BDH, 99%) in deionized water with the concentrations of 1.5 M and 0.75 M for Co²⁺ and Al³⁺ ions respectively. Oleylamine (Sigma-Aldrich, 70%) and 1-butanol (5 ml; Sigma-Aldrich, 99.4 %) were mixed under magnetic stirring with N₂ purging. Then, solution A was added dropwise. The total volume of solution A and oleylamine was kept 10ml, while the volume ratio of oleylamine/solution A was controlled as 9 for CoAl-OAm-1, 4 for CoAl-OAm-2, and 1 for CoAl-OAm-3. After further stirring for 10 minutes, the mixture was heated at 120°C for 24 hours in a Teflon lined stainless steel autoclave. The products were collected by centrifugation, washed three times with H₂O: EtOH = 1 : 1, and dried at 80 °C.

CoAl-DMTDAm-*n* (*n* = 1 - 3) nanoplatelets were prepared in the same process with N,N-dimethyltetradecylamine (Sigma-Aldrich, 98%) substituting oleylamine.

### NiAl-OAm-n and NiAl-DMTDAm-n (n = 1 - 3)

NiAl-OAm-*n* (*n* = 1 - 3) nanoplatelets were prepared in single component microemulsions. A typical synthesis process is as follows: Solution A was prepared by dissolving NiCl₂·6H₂O (Sigma-Aldrich, 99%) and AlCl₃·6H₂O (BDH, 99%) in deionized water with the concentrations of 1.5 M and 0.75 M for Ni²⁺ and Al³⁺ ions respectively. Oleylamine (Sigma-Aldrich, 70%) and 1-butanol (5 ml; Sigma-Aldrich, 99.4 %) were mixed under magnetic stirring with N₂ purging. Then, solution A was added dropwise. The total volume of solution A and oleylamine was kept 10 ml, while the volume ratio of oleylamine/solution A was controlled as 9 for NiAl-OAm-1, 4 for NiAl-OAm-2, and 1 for NiAl-OAm-3. After further stirring for 10 minutes, the mixture was heated at 120°C for 24 hours in a Teflon lined stainless steel autoclave. The products were collected by centrifugation, washed three times with H₂O: EtOH = 1 : 1, and dried at 80 °C.

NiAl-DMTDAm-*n* (*n* = 1 - 3) nanoplatelets were prepared in the same process with N,N-dimethyltetradecylamine (Sigma-Aldrich, 98%) substituting oleylamine.

### ZnAl-DMTDAm-n (n = 1 - 3)

ZnAI-DMTDAm-n (*n* = 1 - 3) nanoplatelets were prepared in single component microemulsions. A typical synthesis process is as follows: Solution A was prepared by dissolving ZnCl₂ (Sigma-Aldrich, ≥98%) and AlCl₃·6H₂O (BDH, 99%) in deionized water with the concentrations of 1.5 M and 0.75 M for Zn²⁺ and Al³⁺ ions respectively. N,N-dimethyltetradecylamine (Sigma-Aldrich, 98%) and 1-butanol (5 ml; Sigma-Aldrich, 99.4 %) were mixed under magnetic stirring with N₂ purging. Then, solution A was added dropwise. The total volume of solution A and oleylamine was kept 10 ml, while the volume ratio of oleylamine/solution A was controlled as 9 for ZnAl-DMTDAm-1, 4 for ZnAl-DMTDAm-2, and 1 for ZnAl-DMTDAm-3. After further stirring for 10 minutes, the mixture was heated at 60°C for 24 hours in a Teflon lined stainless steel autoclave. The products were collected by centrifugation, washed three times with H₂O: EtOH = 1 : 1, and dried at 60 °C.

### LiAl-DMTDAm-n (n = 1 - 3)

LiAl-DMTDAm-*n* (*n* = 1 - 3) nanoplatelets were prepared in single component microemulsions. A typical synthesis process is as follows: Solution A was prepared by dissolving LiCl (Sigma-Aldrich, ≥99%) and AlCl₃·6H₂O (BDH, 99%) in deionized water with the concentrations of 1.5 M and 0.75 M for Li⁺ and Al³⁺ ions respectively. N,N-dimethyltetradecylamine (Sigma-Aldrich, 98%) and 1-butanol (5 ml; Sigma-Aldrich, 99.4 %) were mixed under magnetic stirring with N₂ purging. Then, solution A was added dropwise. The total volume of solution A and oleylamine was kept 10 ml, while the volume ratio of oleylamine/solution A was controlled as 9 for LiAl-DMTDAm-1, 4 for LiAl-DMTDAm-2, and 1 for LiAl-DMTDAm-3. After further stirring for 10 minutes, the mixture was heated at 120°C for 24 hours in a Teflon lined stainless steel autoclave. The products were collected by centrifugation, washed three times with H₂O: EtOH = 1 : 1, and dried at 80 °C.

### CaAl-DOAm-n, CaAl-OAm-n and CaAl-DOAm-OAm-n (n = 1 - 3)

CaAl-OAm-*n* (*n* = 1 - 3) nanoplatelets were prepared in single component microemulsions. A typical synthesis process is as follows: Solution A was prepared by dissolving CaCl₂ (Sigma-Aldrich, ≥93%) and AlCl₃·6H₂O (BDH, 99%) in deionized water with the concentrations of 1.5 M and 0.75 M for Ca²⁺ and Al³⁺ ions respectively. N,N-dimethyltetradecylamine (Sigma-Aldrich, 98%) and 1-butanol (5 ml; Sigma-Aldrich, 99.4 %) were mixed under magnetic stirring with N₂ purging. Then, solution A was added dropwise. The total volume of solution A and oleylamine was kept 10ml, while the volume ratio of oleylamine/solution A was controlled as 9 for CaAl-OAm-21, 4 for CaAl-OAm-2, and 1 for CaAl-OAm-23. After further stirring for 10 minutes, the mixture was heated at 120°C for 24 hours in a Teflon lined stainless steel autoclave. The products were collected by centrifugation, washed three times with H₂O : EtOH = 1 : 1, and dried at 80 °C.

CaAl-DOAm-*n* (*n* = 1 - 3) nanoplatelets were prepared in the same process with dioctylamine (Sigma-Aldrich, ≥ 95%) substituting oleylamine.

CaAl-DOAm-OAm-*n* (*n* = 1 - 3) nanoplatelets were prepared in the same process with a mixture of equal DOAm and OAm substituting oleylamine.

### NiFe-DMTDAm-n (n = 1 - 3)

NiFe-DMTDAm-*n* (*n* = 1 - 3) nanoplatelets were prepared in single component microemulsions. A typical synthesis process is as follows: Solution A was prepared by dissolving NiCl₂·6H₂O (BDH, 97%) and FeCl₃ (BDH, 98%) in deionized water with the concentrations of 1.5 M and 0.75 M for Ni²⁺ and Fe³⁺ ions respectively. N,N-dimethyltetradecylamine (Sigma-Aldrich, 98%) and 1-butanol (5 ml; Sigma-Aldrich, 99.4 %) were mixed under magnetic stirring with N₂ purging. Then, solution A was added dropwise. The total volume of solution A and oleylamine was kept 10ml, while the volume ratio of oleylamine/solution A was controlled as 9 for NiFe-DMTDAm-1, 4 for NiFe-DMTDAm-2, and 1 for NiFe-DMTDAm-3. After further stirring for 10 minutes, the mixture was heated at 120°C for 24 hours in a Teflon lined stainless steel autoclave. The products were collected by centrifugation, washed three times with H₂O: EtOH = 1 : 1, and dried at 80 °C.

### Powder X-Ray Diffraction

### 1. Co-Al LDHs

The powder XRD patterns of all the Co-Al LDHs synthesised using oleylamine or N,N-dimethyltetradecylamine showed series of (00/) Bragg reflections for a rhombohedral (3R) sequence can be seen for all six samples. Their positions give a *c*-lattice parameters of *ca.* 23.25 Å for CoAl-OAm-*n (n* = 1 - 3) and ca. 23.12 Å for CoAl-DMTDAm-*n* (*n* = 1 - 3). The corresponding interlamellar separations range from 7.70 Å to 7.75 Å, which are quite similar to the values of Cl⁻ ions intercalated LDHs. The position of (110) Bragg reflection gives a direct measure of a and *b* lattice parameters *a* = *b* = 2*d*₁₁₀ = 3.07 Å for CoAl-OAm-*n* and CoAl-DMTDAm-*n* (*n* = 1 - 3). The X-ray crystallographic data for Co-Al LDH samples is listed in Table 7. Crystallite sizes were calculated using Scherrer equation and listed in Table 7.

**Table 7: Summary of X-ray crystallographic data for Co-Al LDH samples**

| samples | Bragg Reflection 2θ (FWHM) (°) | | | Lattice parameters (Å) | | Crystallite size using Scherrer Equation (nm) | |
|---|---|---|---|---|---|---|---|
| | 003 | 006 | 110 | *a* | *c* | *a*, *b*-plane | *c*-axis |
| CoAl-OAm-1 | 11.40 (0.562) | 23.02 (0.764) | 60.25 (-)* | 3.07 | 23.23 | - | 12.99 |
| CoAl-OAm-2 | 11.40 (0.550) | 22.96 (0.769) | 60.25 (-)* | 3.07 | 23.26 | - | 13.14 |
| CoAl-OAm-3 | 11.42 (0.340) | 22.98 (0.344) | 60.21 (0.329) | 3.07 | 23.24 | 37.95 | 28.96 |
| CoAl-DMTDAm-1 | 11.48 (0.301) | 23.09 (0.340) | 60.22 (0.312) | 3.07 | 23.12 | 42.17 | 32.54 |
| CoAl-DMTDAm-2 | 11.49 (0.259) | 23.07 (0.269) | 60.19 (0.303) | 3.07 | 23.11 | 44.92 | 47.45 |
| CoAl-DMTDAm-3 | 11.46 (0.299) | 23.06 (0.308) | 60.21 (0.382) | 3.07 | 23.16 | 29.48 | 35.38 |

| | | | | | | | |
|---|---|---|---|---|---|---|---|
| * FWHM values were not available due to insufficient resolution | | | | | | | |

### 2. Ni-Al LDHs

XRD patterns of the Ni-Al LDHs synthesised using oleylamine or N,N-dimethyltetradecylamine exhibited (similarly to Co-Al LDHs), (00/), (01/) and (11/) Bragg reflections for a rhombohedral (3R) sequence for all six samples. Their positions give a *c*-lattice parameter from 23.13 Å to 23.38 Å, while *a* = *b* = 2*d*₁₁₀ = 3.03 Å for NiAl-OAm-*n* and NiAl-DMTDAm-*n* (*n* = 1 - 3). The X-ray crystallographic data for the Ni-Al LDH samples is listed in Table 8. The corresponding interlamellar separations range from 7.71 Å to 7.80 Å, which is similar to the values for Cl⁻ ions intercalated in LDHs.

**Table 8: Summary of X-ray crystallographic data for Ni-AI LDH samples**

| samples | Bragg Reflection 2θ (FWHM) (°) | | | Lattice parameters (Å) | | Calculation by scherrer Equation (nm) | |
|---|---|---|---|---|---|---|---|
| | 003 | 006 | 110 | *a* | *c* | *a*,*b*-plane | *c*-axis |
| NiAl-OAm-1 | 11.43 (1.260) | 23.03 (1.386) | 61.31 (1.008) | 3.02 | 23.20 | 9.31 | 6.11 |
| NiAl-OAm-2 | 11.35 (0.756) | 22.81 (1.008) | 61.18 (1.008) | 3.03 | 23.38 | 9.30 | 9.49 |
| NiAl-OAm-3 | 11.34 (0.756) | 22.86 (1.008) | 61.14 (0.630) | 3.03 | 23.38 | 15.53 | 9.49 |
| NiAl-DMTDAm-1 | 11.45 (0.882) | 23.14 (1.008) | 61.23 (0.630) | 3.03 | 23.13 | 15.54 | 8.67 |
| NiAl-DMTDAm-2 | 11.42 (0.756) | 23.16 (1.008) | 61.21 (0.630) | 3.03 | 23.15 | 15.53 | 9.49 |
| NiAl-DMTDAm-3 | 11.40 (0.630) | 22.99 (0.756) | 61.20 (0.630) | 3.03 | 23.25 | 15.53 | 12.14 |

### 3. Zn-Al LDHs

The powder XRD patterns of the Zn-Al LDHs synthesised using N,N-dimethyltetradecylamine can be indexed to zinc aluminium carbonate hydroxide hydrate (JCPDS PDF 00-048-1022). The lattice parameters and crystallite sizes are summarised in Table 9, the c parameter range from 22.92 Å to 23.33 Å and *a* = *b* = 2*d*₁₁₀ = 3.08 Å for ZnAl-DMTDAm-*n*(*n* = 1 - 3). The corresponding interlamellar separations range from 7.64 Å to 7.78 Å.

**Table 9: Summary of X-ray crystallographic data for ZnAl-DMTDAm-n (n = 1 - 3) samples**

| samples | Bragg Reflection 2θ (FWHM) (°) | | | Lattice parameters (Å) | | Calculation by Scherrer Equation (nm) | |
|---|---|---|---|---|---|---|---|
| | 003 | 006 | 110 | a | c | *a*,*b*-*plane* | *c*-axis |
| ZnAl-DMTDAm-1 | 11.53 (0.756) | 23.39 (0.504) | 60.12 (0.504) | 3.08 | 22.92 | 20.16 | 14.14 |
| ZnAl-DMTDAm-2 | 11.39 (0.756) | 22.95 (0.756) | 60.09 (0.756) | 3.08 | 23.27 | 12.59 | 10.94 |
| ZnAl-DMTDAm-3 | 11.37 (0.756) | 22.88 (0.504) | 60.12 (0.504) | 3.08 | 23.33 | 20.17 | 14.13 |

### 4. Li-Al LDHs

The powder XRD patterns of the Li-Al LDHs synthesised using N,N-dimethyltetradecylamine can be indexed to lithium aluminium hydroxide hydrate (JCPDS PDF 00-040-0710) with lattice parameters *a* = *b* = 2√3**d*₁₀₀ = 5.06 Å and c = 23.1 Å. The corresponding lamellar distances are from 7.68 Å to 7.73 Å. The estimated crystallite widths and thicknesses from Scherrer equation are given in Table 10.

**Table 10: Summary of X-ray crystallographic data for LiAl-DMTDAm-n (n = 1 - 3) samples**

| samples | Bragg Reflection 2θ (FWHM) (°) | | | Lattice parameters (Å) | | Calculation by Scherrer Equation (nm) | |
|---|---|---|---|---|---|---|---|
| | 003 | 006 | 110 | a | c | *a*,*b*-plane | *c*-axis |
| LiAl-DMTDAm-1 | 11.43 (0.630) | 23.06 (0.630) | 20.36 (0.756) | 5.07 | 23.19 | 10.98 | 13.36 |
| LiAl-DMTDAm-2 | 11.49 (0.504) | 23.12 (0.504) | 20.29 (0.504) | 5.07 | 23.09 | 17.33 | 17.28 |
| LiAl-DMTDAm-3 | 11.55 (0.346) | 23.13 (0.504) | 20.46 (0.504) | 5.06 | 23.03 | 17.33 | 22.82 |

### 5. Ca-Al LDHs

The powder XRD patterns of all the Ca-Al LDHs synthesised using dioctylamine, or oleylamine, or DOAm/OAm = 1:1 can be indexed to calcium aluminium hydroxide chloride hydrate (JCPDS PDF 00-035-0105). Samples other than CaAl-DOAm-OAm-1, CalAl-OAm-1, and CalAl-OAm-2 contain some boehmite (aluminium oxide hydroxide, JCPDS PDF 00-021-1307), or gibbsite (aluminum oxide hydrate, JCPDS PDF 00-001-0263) impurities. The X-ray crystallographic data of CaAl-OAm-1, CaAl-OAm-2, and CaAl-DOAm-OAm-1 are given in Table 11. The lattice parameters can be calculated from those data as *a* = *b* = 2√3**d*₁₀₀ = 5.75 Å and *c* = 47.10 Å, while the corresponding lamellar separations are from 15.52 Å to 15.72 Å.

**Table 11: Summary of X-ray crystallographic data for Ca-Al LDH samples**

| samples | Bragg Reflection 2θ (FWHM) (°) | | | Lattice parameters (Å) | | Calculation by scherrer Equation (nm) | |
|---|---|---|---|---|---|---|---|
| | 006 | 0012 | 110 | a | c | *a*,*b*-plane | *c*-axis |
| CaAl-OAm-1 | 11.25 (0.791) | 22.64 (0.572) | 31.12 (0.295) | 5.75 | 47.15 | 43.07 | 12.67 |
| CaAl-OAm-2 | 11.26 (0.338) | 22.64 (0.424) | 31.11 (0.301) | 5.75 | 47.13 | 40.98 | 25.43 |
| CaAl-DOAm-OAm-1 | 11.43 (0.256) | 22.88 (0.328) | 31.25 (0.317) | 5.73 | 46.56 | 36.70 | 40.90 |

### 6. Ni-Fe LDHs

The powder XRD patterns of the Ni-Fe LDHs synthesised using N,N-dimethyltetradecylamine have series of (00/), (01/) and (11/) Bragg reflections indicating a rhombohedral (3R) sequence for all three samples. The peak positions give a *c*-lattice parameters from 23.74Å to 23.83 Å, while *a* = *b* = 2*d*₁₁₀ = 3.09 Å for NiFe-DMTDAm-n (*n* = 1 - 3). The corresponding lamellar distances are from 7.91 Å to 7.94 Å, which are also similar to the values of Cl⁻ ions intercalated LDHs. The X-ray crystallographic data for Ni-Fe LDH samples are listed in Table 12.

**Table 12: Summary of X-ray crystallographic data for NiFe-DMTDAm-n (n = 1 -3) samples**

| samples | Bragg Reflection 2θ (FWHM) (°) | | | Lattice parameters (Å) | | Calculation by Scherrer Equation (nm) | |
|---|---|---|---|---|---|---|---|
| | 003 | 006 | 110 | a | c | *a*,*b*-plane | *c*-axis |
| NiFe-DMTDAm-1 | 11.19 (0.756) | 22.46 (0.882) | 59.92 (0.630) | 3.09 | 23.74 | 16.16 | 10.10 |
| NiFe- DMTDAm-2 | 11.14 (0.630) | 22.37 (0.756) | 59.91 (0.504) | 3.09 | 23.83 | 21.84 | 12.13 |
| NiFe-DMTDAm-3 | 11.18 (0.630) | 22.47 (0.630) | 59.87 (0.504) | 3.09 | 23.74 | 21.83 | 13.35 |

### Elemental analysis

The general composition of LDHs is often described as [M^{z+}_{1-*x*}M'³⁺*ₓ*(OH)₂]^{*a*+}(A^{*n*-}) _{*a*/}*ₙ·m*H₂O. The elemental analysis data and estimated formulas are given in Tables 13 and 14. Due to the absorbed amines and the error of the ICP measurement, accurate compositions are not accessible for some sample, especially those contain comparatively large amount of amines.

**Table 13: Summary of elemental analysis data for the LDHs containing transition metals synthesised in single component microemulsions.**

| Sample | observed (*calc.*) (%) | | | | Calc. Formula (impurity *wt*%) |
|---|---|---|---|---|---|
| | M | M' | C | H | |
| CoAl-OAm-1 | 50.05 (45.15) | 7.28 (6.29) | 5.72 (5.10) | 2.5 (2.89) | [Co_{2.3}Al_{0.7}(OH)₆]Cl_{0.7}^{a,*} |
| CoAl-OAm-2 | 43.68 (42.63) | 7.16 (7.10) | 6.09 (5.97) | 2.29 (3.02) | [Co_{2.2}Al_{0.8}(OH)₆]Cl_{0.8}^{a,*} |
| CoAl-OAm-3 | 63.89 (46.4) | 11.84 (8.68) | 1.16 (0.80) | 2.47 (2.43) | [Co_{2.1}Al_{0.9}(OH)₆]Cl_{0.4}(OH)_{0.5}^{a,*} |
| CoAl-DMTDAm-1 | 34.42 (33.69) | 5.33 (5.61) | 1.53 (1.53 ) | 4.65 (4.68) | [Co_{2.2}Al_{0.8}(OH)₆]Cl_{0.8}-5.4H₂O^{b,*} |
| CoAl-DMTDAm-2 | 26.11 (26.25) | 3.45 (3.66) | 1.36 (1.38) | 5.35 (6.35) | [Co_{2.3}Al_{0.7}(OH)₆]Cl_{0.7}·12.6H₂O^{b,*} |
| CoAl-DMTDAm-3 | 54.58 (48.38 | 9.67 (8.05) | 0.38 (0.33) | 3.59 (2.62) | [Co_{2.2}Al_{0.8}(OH)₆](OH)_{0.8}^{*} |
| NiAl-OAm-1 | 33.28 (33.33) | 5.24 (5.33) | ( 13.85 14.07) | 4.36 (5.12) | [Ni_{2.2}Al_{0.8}(OH)₆]Cl_{0.8}·2.2H₂O^{c,*} |
| NiAl-OAm-2 | 35.60 (35.16) | 6.70 (6.93) | ( 19.72 19.74) | 4.52 (5.39) | [Ni_{2.1}Al_{0.9}(OH)₆](OH)_{0.9}^{c,*} |
| NiAl-OAm-3 | 47.14 (45.11) | 8.36 (8.07) | 4.72 (4.39) | 3.58 (3.21) | [Ni_{2.2}Al_{0.8}(OH)₆](OH)_{0.8} ^{c,*} |
| NiAl-DMTDAm-1 | 43.86 (42.92) | 7.99 (8.46) | 5.16 (5.16) | 3.45 (3.30) | [Ni_{2.1}Al_{0.8}(OH)₆]Cl_{0.2}(OH)_{0.7}^{d,*} |
| NiAl-DMTDAm-2 | 39.70 (39.15) | 7.37 (7.71) | 2.84 (2.86) | 3.34 (3.12) | [Ni_{2.1}Al_{0.9}(OH)₆](OH)_{0.9}·0.6H₂O^{d,*} |
| NiAl-DMTDAm-3 | 45.80 (44.67) | 8.41 (8.60) | 0.22 (0.20) | 1.15 (2.18) | [Ni_{2.1}Al_{0.9}(OH)₆]Cl_{0.9}^{*} |
| ZnAl-DMTDAm-1 | 56.55 (40.85) | 14.67 (11.24) | 3.16 (2.50) | 1.72 (2.10) | [Zn_{1.8}Al_{1.2}(OH)₆](CO₃)_{0.6} |
| ZnAl-DMTDAm-2 | 65.22 (41.36) | 18.14 (11.38) | 1.40 (0.84) | 1.95 (2.55) | [Zn_{1.8}Al_{1.2}(OH)₆](CO₃)_{0.2}(OH)_{1.2} |
| ZnAl-DMTDAm-3 | 63.08 (40.72) | 19.97 (12.85) | 0.61 (0.44) | 2.86 (2.62) | [Zn_{1.7}Al_{1.3}(OH)₆](CO₃)_{0.1}(OH)_{1.1} |
| NiFe-DMTDAm-1 | 22.35 (23.45) | 8.62 (9.56) | 6.73 (6.03) | 4.75 (6.00) | [Ni_{2.1}Fe_{0.9}(OH)₆]Cl_{0.9}·9.9H₂O^{e,*} |
| NiFe-DMTDAm-2 | 21.47 (21.37) | 8.31 (8.71) | 6.57 (6.60) | 4.62 (6.50) | [Ni_{2.1}Fe_{0.9}(OH)₆]Cl_{0.9}·12.3H₂O^{e,*} |
| NiFe-DMTDAm-3 | 25.24 (25.41) | 10.27 (10.36) | 4.27 (4.30) | 2.42 (5.48) | [Ni_{2.1}Fe_{0.9}(OH)₆]Cl_{0.9}·8.4H₂O^{e,*} |

| | | | | | |
|---|---|---|---|---|---|
| ^{a} CoAl-OAm-*n* (*n* = 1 - 3) contain *wt*. 6%, 7% and 1% OAm impurity, respectively. ^{b} both CoAl- DMTDAm-1 and CoAl-DMTDAm-2 contain *wt*. 2% DMTDAm impurity. ^{c} NiAl-OAm-*n* (*n* = 1 - 3) contain *wt*. 17%, 24% and 6% OAm impurity, respectively. ^{d} NiAl- DMTDAm-1 and NiAl-DMTDAm-2 contain *wt*. 6% and 12% DMTDAm impurity, respectively ^{e} NiAl-OAm-*n* (*n* = 1 - 3) contain *wt*. 8%, 8% and 5% OAm impurity, respectively. * all these samples contain trace CO₃²⁻ which can be confirmed in IR spectra. | | | | | |

**Table 14: Summary of elemental analysis data for other LDHs synthesised in single component microemulsions.**

| Sample | observed (*calc*.) (%) | | | | Calc. Formula (impurity *wt*%) |
|---|---|---|---|---|---|
| | M | M' | C | H | |
| LiAl-DMTDAm-1 | - | 12.42 (13.36) | 1.42 (1.52) | 3.06 (8.02) | [LiAl₂(OH)₆](OH)·12H₂O^{a, *} |
| LiAl-DMTDAm-2 | - (1.73) | 12.19 (13.46) | 0.79 (0.86) | 3.25 (7.95) | [LiAl₂(OH)₆](OH)·12H₂O^{a,*} |
| LiAl-DMTDAm-3 | - (1.67) | 31.68 (32.44) | 0.32 (0.3) | 3.42 (3.94) | [Li_{0.4}Al₂(OH)₆](OH)_{0.4}^{a,*} |
| CaAl-DOAm-1 | 18.62 (19.10) | 9.24 (9.83) | 1.86 (1.82) | 2.28 (5.06) | [Ca_{1.7}Al_{1.3}(OH)₆]Cl_{1.3}·5.4H₂O^{b,*} |
| CaAl-DOAm-2 | 30.43 (30.00) | 13.56 (13.47) | 2.07 (2.05) | 2.35 (3.20) | [Ca_{1.8}Al_{1.2}(OH)₆]Cl_{0.4}(OH)_{0.8}^{b,*} |
| CaAl-DOAm-OAm-1 | 21.05 (21.44) | 9.06 (39.62) | 1.44 (1.50) | 2.31 (4.85) | [Ca_{1.8}Al_{1.2}(OH)₆]Cl_{1.2}·4.5H₂O^{b,*} |

| | | | | | |
|---|---|---|---|---|---|
| ^{a} LiAl-DMTDAm-*n* (*n* = 1 - 3) contain *wt*. 2%, 1% and 0.5% DMTDAm impurity, respectively. ^{b} CaAl-DMTDAm-*n* (*n* = 1 - 3) contain wt.2%, 3% and 2% amine impurity, respectively. * all these samples contain trace CO₃²⁻ which can be confirmed in IR spectra. | | | | | |

### Electron Microscopy

### 1. Co-Al LDHs

The particles of CoAl-OAm-1 and CoAl-OAm-2 exhibit a platelet morphology, both thin isolated platelets and larger agglomerates are observed. The average diameters are around 65 nm. The particles of CoAl-OAm-3 form well-dispersed circular platelets with an average diameter of 105 nm. The diameter is slightly larger than what was estimated using Scherrer equation. The TEM images of CoAl-DMTDAm-*n* (*n* = 1 - 3) particles indicates that the particles have a morphology consisting of hexagonal thin platelet with average diameters of 135 nm, 160 nm 118.5 nm, respectively. The diameters are in an order of CoAl-DMTDAm-1 ≈ CoAl-DMTDAm-3 < CoAl-DMTDAm-2, which agrees with the tendency estimated by XRD patterns though the real sizes are larger. Statistical analysis of the particle size distribution to a normal distribution gives the mean (µ), standard deviation and variance (Table 15).

**Table 15: Data of statistical analysis of Co-Al LDH particle diameters.**

| Sample | Diameter (nm) | | |
|---|---|---|---|
| | Mean (µ) | Stdev. (σ) | Var. (σ²) |
| CoAl-OAm-1 | 68.34 | 14.22 | 202.4 |
| CoAl-OAm-2 | 60.85 | 13.43 | 180.5 |
| CoAl-OAm-3 | 116.8 | 31.95 | 1020 |
| CoAl-DMTDAm-1 | 145.2 | 47.49 | 2256 |
| CoAl-DMTDAm-2 | 164.9 | 43.74 | 1913 |
| CoAl-DMTDAm-3 | 122.2 | 30.89 | 953.9 |

### 2. Ni-Al LDHs

Well dispersed nanoparticles with diameters below 10 nm were observed for NiAl-OAm-1 and NiAl-OAm-2. The particles of NiAl-OAm-3 are well dispersed round platelets with an average diameter of 16.38 nm. The diameter is similar to that estimated using Scherrer equation. The NiAI-DMTDAm-*n* (*n* = 1 - 3) particles have a morphology consisting of hexagonal thin platelet with average diameters of 25.15 nm, 29.66 nm 33.23 nm, respectively. Statistical analysis of the particle size distribution to a normal distribution gives the mean (µ), standard deviation and variance (Table 16).

**Table 16: Data of statistical analysis of Ni-Al LDH particle diameters.**

| Sample | Diameter (nm) | | |
|---|---|---|---|
| | Mean (µ) | Stdev. (σ) | Var. (σ²) |
| NiAl-OAm-3 | 17.06 | 3.038 | 9.227 |
| NiAl-DMTDAm-1 | 25.54 | 5.976 | 35.71 |
| NiAl-DMTDAm-2 | 29.02 | 6.331 | 40.09 |
| NiAl-DMTDAm-3 | 34.23 | 7.337 | 53.84 |

### 3. Zn-AI LDHs

The TEM images of the three Zn-Al LDH samples illustrate that the particles of the three samples have crystallite morphologies consisting of thin sheets.

### 4. Li-Al LDHs

The particles of LiAl-DMTDAm-*n* (*n* = 1 - 3) exhibit a hexagonal platelet morphology with a uniform diameter of 77.69 nm for LiAl-DMTDAm-1, 108.6 nm for LiAl-DMTDAm-2, and 119.3 nm for LiAl-DMTDAm-3. The platelet sizes are significantly larger than those estimated using Scherrer equation. Statistical analysis of the particle size distribution to a normal distribution gives the mean (µ), standard deviation and variance (Table 17).

**Table 17: Data of statistical analysis of Li-Al LDH particle diameters.**

| Sample | Diameter (nm) | | |
|---|---|---|---|
| | Mean (µ) | Stdev. (σ) | Var. (σ²) |
| LiAl-DMTDAm-1 | 77.69 | 18.96 | 359.4 |
| LiAl-DMTDAm-2 | 108.6 | 23.88 | 570.1 |
| LiAl-DMTDAm-3 | 119.3 | 31.25 | 976.3 |

### 5. Ca-Al LDHs

The particles of CaAl-OAm-1 exhibit needle morphology with lengths of approximately 30 nm and thickness of ca. 5 nm. For CaAl-OAm-2, besides the needle-like particles, thin platelets with a width of 30-50 nm can also be observed. The particles of CaAl-DOAm-OAm-1 are large hexagonal platelets with diameters from 0.5 µm to 1 µm.

### 6. Ni-Fe LDHs

The particles of NiFe-DMTDAm-*n* (*n* = 1 - 3) exhibit a hexagonal platelet morphology with the uniform diameters of 24.7 nm for NiFe-DMTDAm-1, 30.8 nm for NiFe-DMTDAm-2, and 35.2 nm for NiFe-DMTDAm-3. Statistical analysis of the particle size distribution to a normal distribution gives the mean (µ), standard deviation and variance (Table 18).

**Table 18: Data of statistical analysis of Ni-Fe LDH particle diameters.**

| Sample | Diameter (nm) | | |
|---|---|---|---|
| | Mean (µ) | Stdev. (σ) | Var. (σ2) |
| NiFe-DMTDAm-1 | 24.68 | 6.690 | 44.76 |
| NiFe-DMTDAm-2 | 30.78 | 7.354 | 54.09 |
| LiAl-DMTDAm-3 | 35.21 | 7.289 | 53.13 |

## Claims

1. A method for the preparation of layered double hydroxides, the method comprising,
providing a metal-containing solution containing monovalent or divalent metal cations and trivalent metal cations,
providing an amine surfactant,
mixing the metal-containing solution and surfactant at a predetermined ratio to form a reaction mixture, and
hydrothermally treating the reaction mixture at a predetermined temperature for a predetermined period,
wherein the predetermined ratio is a volume ratio solution:surfactant and is in the range 1:12 to 3:1.

2. A method as claimed in claim 1, wherein the surfactant comprises a C₄₋C₂₂ hydrocarbyl amine surfactant.

3. A method as claimed in claim 2, wherein the surfactant comprises a C₁₂₋C₂₂ hydrocarbyl amine surfactant.

4. A method as claimed in any one of the preceding claims, wherein the surfactant comprises a C₁₂₋C₂₂ alkyl or alkenyl amine surfactant.

5. A method according to any one of claims 1 to 4, wherein an assistant surfactant comprising a C₂ to C₆ primary alcohol is also provided in the reaction mixture.

6. A method according to claim 5, wherein the assistant surfactant is 1-butanol.

7. A method as claimed in any one of the preceding claims, wherein the monovalent metal cations comprise Li⁺, and the divalent metal cations are selected from one or more of Mg²⁺, Co²⁺, Ca²⁺, Zn²⁺ or Ni²⁺.

8. A method as claimed in any one of the preceding claims, wherein the trivalent metal cations are selected from Al³⁺ and Fe³⁺.

9. A method as claimed in any one of claims 1 to 6, wherein the layered double hydroxide is of formula:
[M^{II}₍₁₋ₓ₎M^{III}ₓ(OH)₂]^{x+}A^{z-}_{x/z}.yH₂O
where M^{II} = Mg²⁺, Co²⁺, Ca²⁺, Zn²⁺ or Ni²⁺,
M^{III} = Al³⁺ or Fe³⁺,
A is an anion,
Z is an integer
X is <1,
Y is ≥0.

10. A method as claimed in any one of the preceding claims, wherein the predetermined temperature is 150°C or lower.

11. A method as claimed in any one of the preceding claims, wherein the predetermined period is 36 hours or lower.

12. A method as claimed in any one of the preceding claims, wherein the LDH, as prepared, comprises platelets with a controlled particle size.

13. A method as claimed in claim 12, wherein the controlled particle size is in the range 30-100 nm.

14. A method as claimed in either claim 12 or claim 13, wherein the average platelet area is in the range 900 to 6000 nm².

15. A method as claimed in any one of claims 12 to 14, wherein the platelet thickness is in the range 4.5 nm to 30 nm.

16. A method as claimed in claim 15, wherein the platelet area/platelet thickness aspect ratio of the platelets is in the range 30 to 1500 nm.

17. A method as claimed in any one of the preceding claims, further comprising incorporating the layered double hydroxide in a composite.

## Patentansprüche

1. Verfahren zur Präparation von Layered Double Hydroxides (LDH), wobei das Verfahren Folgendes umfasst:
Bereitstellen einer metallhaltigen Lösung, die einwertige oder zweiwertige Metall-Kationen und dreiwertige Metall-Kationen enthält,
Bereitstellen eines Amin-Tensids,
Mischen der metallhaltigen Lösung und des Tensids in einem vorbestimmten Verhältnis zum Bilden einer Reaktionsmischung und
hydrothermales Behandeln der Reaktionsmischung bei einer vorbestimmten Temperatur für einen vorbestimmten Zeitraum,
wobei das vorbestimmte Verhältnis ein Volumenverhältnis des Volumens der Lösung zum Volumen des Tensids ist und im Bereich von 1:12 bis 3:1 liegt.

2. Verfahren nach Anspruch 1, wobei das Tensid ein C₄₋C₂₂-Kohlenwasserstoffrest-Amin-Tensid umfasst.

3. Verfahren nach Anspruch 2, wobei das Tensid ein C₁₂₋C₂₂-Kohlenwasserstoffrest-Amin-Tensid umfasst.

4. Verfahren nach einem der vorhergehenden Ansprüche, wobei das Tensid ein C₁₂₋C₂₂-Alkyl- oder Alkenyl-Amin-Tensid umfasst.

5. Verfahren nach einem der Ansprüche 1 bis 4, wobei ein Hilfstensid, das einen C₂- bis C₆-Primäralkohol umfasst, ebenfalls in der Reaktionsmischung bereitgestellt wird.

6. Verfahren nach Anspruch 5, wobei das Hilfstensid ein 1-Butanol ist.

7. Verfahren nach einem der vorhergehenden Ansprüche, wobei die einwertigen Metall-Kationen Li⁺ umfassen und die zweiwertigen Metall-Kationen aus einem oder mehreren von Mg²⁺, Co²⁺, Ca²⁺, Zn²⁺ oder Ni²⁺ ausgewählt werden.

8. Verfahren nach einem der vorhergehenden Ansprüche, wobei die dreiwertigen Metall-Kationen aus Al³⁺ und Fe³⁺ ausgewählt werden.

9. Verfahren nach einem der Ansprüche 1 bis 6, wobei das Layered Double Hydroxide folgender Formel entspricht:
[M^{II}₍₁₋ₓ₎M^{III}ₓ(OH)₂]^{X+}A^{Z-}_{x/z}.yH2O,
wobei M^{II} = Mg²⁺, Co²⁺, Ca²⁺, Zn²⁺ oder Ni²⁺ ist und
M^{III} = Al3+ oder Fe3+ entspricht,
wobei A ein Anion,
Z eine ganze Zahl,
X < 1 und
Y ≥ 0 ist.

10. Verfahren nach einem der vorhergehenden Ansprüche, wobei die vorbestimmte Temperatur 150 °C oder niedriger ist.

11. Verfahren nach einem der vorhergehenden Ansprüche, wobei der vorbestimmte Zeitraum 36 Stunden oder kürzer ist.

12. Verfahren nach einem der vorhergehenden Ansprüche, wobei das LDH gemäß Präparation Plättchen mit einer kontrollierten Partikelgröße umfasst.

13. Verfahren nach Anspruch 12, wobei die kontrollierte Partikelgröße im Bereich von 30 - 100 nm liegt.

14. Verfahren nach Anspruch 12 oder 13, wobei die durchschnittliche Plättchenoberfläche im Bereich von 900 bis 6 000 nm² liegt.

15. Verfahren nach einem der Ansprüche 12 bis 14, wobei die Plättchendicke im Bereich von 4,5 nm bis 30 nm liegt.

16. Verfahren nach Anspruch 15, wobei das Größenverhältnis der Plättchenoberfläche zur Plättchendicke der Plättchen im Bereich von 30 bis 1 500 nm liegt.

17. Verfahren nach einem der vorhergehenden Ansprüche, weiterhin umfassend das Einbeziehen des Layered Double Hydroxides in eine chemische Zusammensetzung.

## Revendications

1. Procédé de préparation d'hydroxydes doubles lamellaires, comprenant les étapes suivantes :
fourniture d'une solution contenant des métaux, renfermant des cations métalliques monovalents ou bivalents et des cations métalliques trivalents,
fourniture d'un tensioactif amine,
mélange de la solution contenant des métaux et du tensioactif à un rapport prédéfini pour former un mélange de réaction, et
traitement hydrothermique du mélange de réaction à une température prédéfinie pendant une période prédéfinie,
dans lequel le rapport prédéfini est un rapport de volume solution:tensioactif et se trouve dans une plage comprise entre 1:12 et 3:1.

2. Procédé selon la revendication 1, dans lequel le tensioactif comprend un tensioactif amine hydrocarbyle en C₄-C₂₂.

3. Procédé selon la revendication 2, dans lequel le tensioactif comprend un tensioactif amine hydrocarbyle en C₁₂-C₂₂.

4. Procédé selon l'une quelconque des revendications précédentes, dans lequel le tensioactif comprend un tensioactif amine alkyle ou alcényle en C₁₂-C₂₂.

5. Procédé selon l'une quelconque des revendications 1 à 4, dans lequel un tensioactif assistant comprenant un alcool primaire en C₂ à C₆ est également fourni dans le mélange de réaction.

6. Procédé selon la revendication 5, dans lequel le tensioactif assistant est du 1-butanol.

7. Procédé selon l'une quelconque des revendications précédentes, dans lequel les cations métalliques monovalents comprennent Li+, et les cations métalliques bivalents sont choisis parmi un ou plusieurs de Mg²⁺, Co²⁺, Ca²⁺, Zn²⁺ ou Ni²⁺.

8. Procédé selon l'une quelconque des revendications précédentes, dans lequel les cations métalliques trivalents sont choisis parmi Al³⁺ et Fe³⁺.

9. Procédé selon l'une quelconque des revendications 1 à 6, dans lequel l'hydroxyde double lamellaire est de formule :
[M^{II}₍₁₋ₓ₎M^{III}ₓ(OH)₂]^{x+}A^{z-}_{x/z}.yH₂O
où M^{II} = Mg²⁺, Co²⁺, Ca²⁺, Zn²⁺ ou Ni²⁺,
M^{III} = Al³⁺ ou Fe³⁺,
A est un anion,
Z est un nombre entier,
X est < 1,
Y ≥ 0.

10. Procédé selon l'une quelconque des revendications précédentes, dans lequel la température prédéfinie est inférieure ou égale à 150 °C.

11. Procédé selon l'une quelconque des revendications précédentes, dans lequel la période prédéfinie est inférieure ou égale à 36 heures.

12. Procédé selon l'une quelconque des revendications précédentes, dans lequel l'hydroxyde double lamellaire, une fois préparé, comprend des lamelles de granulométrie contrôlée.

13. Procédé selon la revendication 12, dans lequel la granulométrie contrôlée se trouve dans une plage comprise entre 30 et 100 nm.

14. Procédé selon la revendication 12 ou 13, dans lequel la surface lamellaire moyenne se trouve dans une plage comprise entre 900 et 6 000 nm².

15. Procédé selon l'une quelconque des revendications 12 à 14, dans lequel l'épaisseur lamellaire se trouve dans une plage comprise entre 4,5 et 30 nm.

16. Procédé selon la revendication 15, dans lequel le rapport surface lamellaire/épaisseur lamellaire des lamelles se trouve dans une plage comprise entre 30 et 1500 nm.

17. Procédé selon l'une quelconque des revendications précédentes, dans lequel comprenant en outre l'incorporation de l'hydroxyde double lamellaire dans un composite.
